# EUROPÄISCHE PATENTSCHRIFT

(11) **EP 0 802 312 B1**
(45) Veröffentlichungstag und Bekanntmachung des Hinweises auf die Patenterteilung: **06.06.2001**
(21) Anmeldenummer: 97102720.6
(22) Anmeldetag: 20.02.1997
(51) Int. Cl.: F02D 21/08

(54) **Einrichtung zur Dieselmotorbetriebsregelung mit Abgasrückführung und Ansaugluftdrosselung**
Device for diesel engine operation control with exhaust gas recirculation and intake air throttling
Dispositif pour commander le fonctionnement d'un moteur diesel avec recyclage degaz d'échappement et étranglement d'air aspiré

(30) Priorität: 19.04.1996 DE 19615545
(43) Veröffentlichungstag der Anmeldung: 22.10.1997
(73) Patentinhaber: DaimlerChrysler AG, 70567 Stuttgart (DE)
(72) Erfinder: Fausten, Hans, 73650 Winterbach (DE)

(56) Entgegenhaltungen:
- DE-A- 4 214 880
- FR-A- 2 410 139
- FR-A- 2 441 727
- US-A- 4 433 666
- US-A- 4 442 820

## Beschreibung

Die Erfindung bezieht sich auf eine Einrichtung zur Regelung des Betriebs eines Dieselmotors mit Abgasrückführung und Ansaugluftdrosselung nach dem Oberbegriff des Anspruchs 1.

Einrichtungen dieser Art sind in vielerlei Varianten bekannt, wobei die Abgasrückführung und die Ansaugluftdrosselung übliche Abgasreinigungsmaßnahmen für Dieselmotoren darstellen. Sowohl bei aufgeladenen wie auch bei frei saugenden Dieselmotoren mit elektronischer Motorregelung werden Abgasrückführung und Ansaugluftdrosselung herkömmlicherweise in zwei voneinander unabhängigen Regelkreisen angesteuert.

Die Abgasrückführung wird durch motorbetriebspunktabhängige Ansteuerung eines Abgasrückführ-Stellgliedes bewirkt, dessen Stellung abhängig von Motordrehzahl, Motorlast oder Einspritzmenge, Kühlmitteltemperatur, Ladelufttemperatur und Atmosphärendruck auf einen entsprechenden Sollwert geregelt wird. Die Regelung der Abgasrückführrate, die das Verhältnis der rückgeführten Abgasmenge zur Summe aus rückgeführter Abgasmenge und Frischluftmenge darstellt, erfolgt im Motorsteuergerät herkömmlicherweise entweder indirekt in Form einer Hubregelung, bei der die Stellung des Abgasrückführ-Stellgliedes als Regel- und Stellgröße dient, oder direkt, wobei dann der z.B. mittels eines Luftmassenmessers gemessene Frischluftmassenstrom als Regelgröße und die Stellung des Abgasrückführ-Stellgliedes als Stellgröße dienen. Vereinfachend wird dabei bei gleichbleibendem Motorbetriebspunkt von einer konstanten Zylinderfüllung als Summe aus Frischluftmenge und Abgasrückführmenge ausgegangen.

In "Motronic Engine Management", Robert Bosch GmbH, 1994, S. 50 bis 53 ist eine Einrichtung zur Regelung des Betriebs einer Brennkraftmaschine mit einer derartigen Abgasrückführung sowie mit Mitteln zur Ansaugluftdrosselung offenbart, wobei diese Einrichtung einen Steuerkreis für die Abgasrückführung über ein Abgasrückführ-Stellglied mit dem Frischluftmassenstrom als einer Eingangsgröße aufweist.

Die Ansaugluftdrosselung dient zur Erhöhung der Abgasrückführrate in Fällen, in denen sich auch bei vollständig geöffnetem Abgasrückführ-Stellglied nicht die gewünschte Abgasrückführrate ergibt. Eine vermehrte Ansaugluftdrosselung bewirkt eine Erhöhung der Druckdifferenz zwischen Auspuffkrümmer und Saugrohr bzw. Ladeluftverteilerleitung und damit bei konstantem Öffnungsquerschnitt am Abgasrückführ-Stellglied eine Steigerung der maximal erzielbaren Abgasrückführrate.

Beim aufgeladenen Dieselmotor erfolgt zusätzlich eine Ladedruckregelung. Bekannt ist diesbezüglich zum einen eine gemeinsame Regelstruktur für die Ansaugluftdrosselung und die beispielsweise über ein sogenanntes Wastegateventil bewirkte Ladedruckregelung, wobei abhängig vom gewählten Saugrohrsolldruck, d.h. größer oder kleiner als der Umgebungs- bzw. Referenzdruck, zwischen Ansaugluftdrosselung und Ladedruckregelung umgeschaltet wird. Bei dieser Vorgehensweise können alle drei Regelstrecken unabhängig voneinander optimiert werden, es müssen jedoch Sollwertkennfelder für alle drei Regelfunktionen definiert werden, und die Darstellung der für das Emissionsverhalten des Motors entscheidenden Abgasrückführrate erfordert zwei voneinander unabhängige Sollwertkennfelder in Form eines Abgasrückführ- und eines Ansaugluftdrosselungs-Grundwertkennfeldes.

Ein herkömmliches Alternativverfahren besteht darin, die Abgasrückführung und die Ansaugluftdrosselung mittels eines gemeinsamen Stellgliedes, d.h. durch einen gemeinsamen Regelkreis, anzusteuern, und davon unabhängig die Ladedruckregelung durchzuführen. Bei der gemeinsamen Regelung der Abgasrückführung und Ansaugluftdrosselung wird von einem gemeinsamen Steller, z.B. einem elektropneumatischen Druckwandler, zunächst das Abgasrückführ-Stellglied geöffnet und dann, wenn das AbgasrückführStellglied vollständig geöffnet und das Ansteuertastverhältnis weiter erhöht wird, die Ansaugluftdrosselklappe geschlossen. Dieses Verhalten kann über geeignete Kennlinien für die beiden Aktuatoren realisiert werden. Bei dieser Vorgehensweise ist zwar nur ein Regelkreis für die beiden Regelungsfunktionen erforderlich, jedoch ergibt sich die Schwierigkeit, daß beide beteiligten Aktuatoren trotz ihres unterschiedlichen Übertragungsverhaltens in einer Regelstrecke abgebildet werden müssen. Die Regelgröße ist von Bauteiltoleranzen beeinflußt, und Ladedruckregelung einerseits sowie Drosselklappensanteuerung andererseits arbeiten unabhängig voneinander, was das Instationärverhalten nachteilig beeinflussen kann. Außerdem erfolgt im Arbeitsbereich der Ansaugluftdrosselung keine Regelung, sondern nur eine Steuerung des Saugrohrdrucks.

Einrichtungen der eingangs genannten Art sind auch in der Offenlegungsschrift DE 42 14 880 A1 und in dem Zeitschriftenaufsatz E. Pauli und A. Amstutz, Regelstrategie des Comprex® -aufgeladenen Dieselmotors zur Emissionsminimierung, MTZ Motortechnische Zeitschrift 50, 1989, Seite 263 beschrieben.

Der Erfindung liegt als technisches Problem die Bereitstellung einer Einrichtung der eingangs genannten Art zugrunde, die eine vorteilhafte Funktionalität hinsichtlich Abgasrückführung und Ansaugluftdrosselung aufweist und flexibel applizierbar ist.

Die Erfindung löst dieses Problem durch die Bereitstellung einer Einrichtung mit den Merkmalen des Anspruchs 1. Diese Einrichtung regelt die Abgasrückführrate in einer herkömmlichen Weise unter Verwendung des Frischluftmassenstroms als Regelgröße und sieht darüber hinaus für die Ansaugluftdrosselung die Vorgabe eines Saugrohrsolldruckwertes vor, der sich additiv aus einem motorbetriebspunktabhängig bestimmten Solldruckgrundwert und einem Solldruckzusatzwert zusammensetzt. Dieser Solldruckzusatzwert beschreibt in vorteilhafter Weise den Einfluß der Abgasrückführregelung, indem er durch Multiplikation eines von der Motordrehzahl und der Frischluftmassenstrom-Regeldifferenz der Abgasrückführratenregelung abhängigen Zusatzrohwertes mit einem von der Stellung des Abgasrückführ-Stellgliedes abhängigen Faktor festgelegt ist. Dies vereinfacht die Applikation merklich, da sich auf diese Weise die Ansaugluftdrosselung und gegebenenfalls die Ladedruckregelung in ihrem Verhalten automatisch auf geänderte Anlagendimensionierungen im Abgasrückführ-Regelkreis anpassen. Es ist daher beispielsweise bei Verwendung eines neuen Abgasrückführventils nicht erforderlich, irgendwelche Saugrohrsolldruck-Kennfelder der Ansaugluftregelung bzw. Ladedruckregelung zu ändern.

Bei Vorhandensein einer Ladedruckregelung realisiert diese Einrichtung eine gemeinsame Regelstruktur für die Ansaugluftdrosselung und die Ladedruckregelung durch Vorgabe eines gemeinsamen Grundwertkennfeldes, in dem motorbetriebspunktabhängige Ladesolldrücke vorgegeben werden. Die Einrichtung führt somit sowohl im Ansaugluftdrosselbetrieb als auch im Ladebetrieb eine Regelung und nicht nur eine Steuerung des Saugrohrdrucks durch. Alle drei Regelstrecken, d.h. für die Abgasrückführung, die Ansaugluftdrosselung und die Ladedruckregelung, können optimal dargestellt werden. Die für das Emissionsverhalten entscheidende Abgasrückführrate wird in nur einem Grundkennfeld für den Sollwert des Frischluftmassenstroms bestimmt.

Bei einer nach Anspruch 2 weitergebildeten Einrichtung ist vorgesehen, daß der die Stellung des Abgasrückführ-Stellgliedes repräsentierende, multiplikative Faktor im Bereich geringen Stellgliedöffnungsgrades auf null bleibt und erst ab einem vorgebbaren Schwellwert mit steigendem Öffnungsgrad bis auf den Wert eins ansteigt, wodurch mit steigendem Öffnungsgrad der Solldruckgrundwert für die Saugrohrdruckregelung zunehmend von dem Solldruckzusatzwert beeinflußt wird, der kennfeldabhängig von der Motordrehzahl und der Frischluftmassenstrom-Regeldifferenz festgelegt ist.

Bei einer nach Anspruch 3 weitergebildeten Einrichtung sind ein Minimaldruck-Kennfeld für den Saugrohrsolldruck und eine Maximalauswahleinheit vorgesehen, die den größeren Wert des aus diesem Kennfeld resultierenden Solldruckwertes einerseits und des um den Solldruckzusatzwert korrigierten Solldruckgrundwertes andererseits als maßgeblichen Saugrohrsolldruck auswählt. Damit läßt sich die Vorgabe von zu niedrigen Saugrohrsolldrücken verhindern.

Eine bevorzugte Ausführungsform der Erfindung ist in den Zeichnungen dargestellt und wird nachfolgend beschrieben. Hierbei zeigen:
- Fig. 1: ein Blockdiagramm eines erfindungswesentlichen Teils einer Einrichtung zur Dieselmotorregelung mit Abgasrückführuny und Ansaugluftdrosselung und
- Fig. 2: ein schematisches Blockdiagramm einer mit der Einrichtung von Fig. 1 regelbaren Dieselmotoranlage.

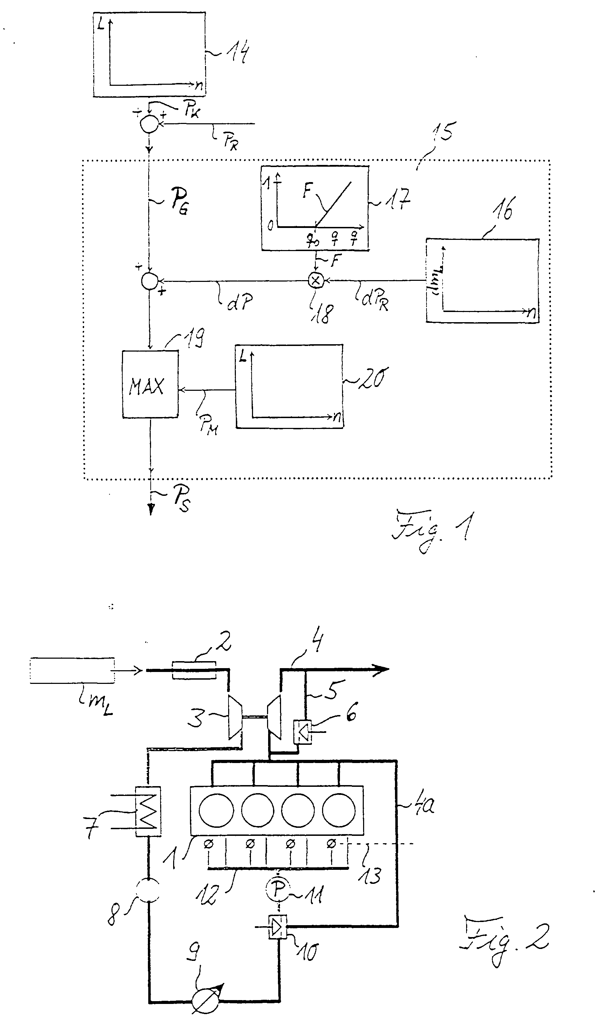

In Fig. 2 ist eine typische Dieselmotoranlage mit einem aufgeladenen Dieselmotor (1) dargestellt, bei der eine Abgasrückführung, eine Ansaugluftdrosselung und eine Ladedruckregelung vorgesehen sind. Der angesaugte Frischluftmassenstrom (m_{L}) wird von einem Luftmassenmesser (2) gemessen und über einen Abgasturbolader (3) geführt, dessen andere Seite im Abgasstrang (4) liegt. Parallel zu dieser Turboladerseite ist im Abgasstrang (4) eine Umgehungsleitung (5) vorgesehen, in der sich ein sogenanntes Wastegateventil (6) befindet, mit dem die über den Abgasturbolader (3) geführte Abgasmenge und damit der vom Abgasturbolader (3) erzeugte Ladedruck regulierbar sind.

Der über den Abgasturbolader (3) geführte Frischluftmassenstrom (m_{L}) passiert einen Ladeluftkühler (7), wonach seine Temperatur von einem zugehörigen Sensor (8) erfaßt wird. Der Frischluftmassenstrom (m_{L}) wird dann über eine Drosselklappe (9) geführt, die als Stellglied für die Ansaugluftdrosselung dient. Von dort gelangt er zu einem als Stellglied der Abgasrückführung dienenden Abgasrückführventil (10), zu dem andererseits ein Zweig (4a) des Abgasstrangs (4) geführt ist. Über das Abgasrückführventil (10) gelangt dann ein Frischluft/Abgas-Gemisch mit regelbarem Abgasanteil in den motornahen Saugrohrbereich, wo der dort herrschende Saugrohrdruck (P) von einem zugehörigen Drucksensor (11) erfaßt wird. Die zum Motor (1) führende Luftverteilervorrichtung (12) beinhaltet eine übliche Kanalabschaltung (13).

Der gezeigten Dieselmotoranlage von Fig. 2 sind nicht näher gezeigte, weitere Motorregelungskomponenten herkömmlicher Bauart zugeordnet, insbesondere ein geeignetes Motorsteuergerät mit den zugehörigen peripheren Regelungskomponenten, um die Abgasrückführung, die Ansaugluftdrosselung und die Ladedruckregelung geeignet vorzunehmen. Soweit in dieser damit realisierten Einrichtung zur Regelung des Betriebs des Dieselmotors (1) neuartige, erfindungswesentliche Regelungskomponenten und -maßnahmen verwendet sind, sind diese in Fig. 1 dargestellt und werden nachfolgend näher erläutert. Die Motorregelungseinrichtung führt eine Abgasrückführregelung auf diejenige herkömmliche Weise durch, bei der die Stellung des Abgasrückführventils (10) als Stellgröße und der im Luftmassenmesser (2) gemessene Frischluftmassenstrom (m_{L}) als Regelgröße dienen. Die jeweils einzustellende, für das Abgasemissionsverhalten des Motors (1) entscheidende Abgasrückführrate ist durch ein Frischluftmassenstrom-Kennfeld bestimmt, das den Sollwert (m_{Ls}) des Frischluftmassenstroms motorbetriebspunktabhängig in Abhängigkeit von der Drehzahl (n), der Motorlast bzw. der Einspritzmenge, der Kühlmitteltemperatur, der vom zugehörigen Sensor (8) erfaßten Ladelufttemperatur und dem Atmosphärendruck vorgibt.

Für die Ansaugluftdrosselung und die Ladedruckregelung ist eine gemeinsame Regelstruktur vorgesehen, in der die Abgasrückführregelung berücksichtigt wird und deren Komponenten in Fig. 1 detaillierter dargestellt sind. Für diese Regelstruktur beinhaltet die Motorregeleinrichtung zunächst ein der Ansaugluftdrosselung und Ladedruckregelung gemeinsames, abgespeichertes Grundwertkennfeld (14), mit der für die beiden Regelungsfunktionen ein gemeinsamer Saugrohr-Solldruckrohwert (P_{K}) in Abhängigkeit von der Motordrehzahl (n) und der Motorlast (L) vorgegeben wird, welcher das Maß angibt, um das der Solldruck den Atmosphärendruck, der als Referenzdruck (P_{R}) dient, übersteigt. Eine anschließende Addition des dem Grundwertkennfeld (14) entnommenen Druckrohwertes (P_{K}) mit dem Referenzdruck (P_{R}) liefert damit einen Saugrohr-Solldruckgrundwert (P_{G}), der einem der Grundwertkennfeldstufe (14) nachfolgenden, in Fig. 1 punktiert umrahmten Teil (15) der insgesamt in Fig. 1 dargestellten Einheit zugeführt wird, die zur Bestimmung des gemeinsam für die Ansaugluftdrosselung und Ladedruckregelung Saugrohrsolldrucks (P_{S}) dient.

Dieser Teil (15) der Regeleinrichtung beinhaltet zum einen ein abgespeichertes Kennfeld (16), das einen Saugrohr-Solldruckzusatzrohwert (dP_{R}), der negatives Vorzeichen besitzt, in Abhängigkeit von der Motordrehzahl (n) und der Frischluftmassenstrom-Regeldifferenz (dm_{L}=m_{L}-m_{Ls}) vorgibt, sowie zum anderen einen Kennlinienspeicher (17), in dem eine Kennlinie für einen zwischen null und eins liegenden Multiplikationsfaktor (F) in Abhängigkeit vom Öffnungsquerschnitt (q) des Abgasrückführventils (10) abgelegt ist. Dieser Faktor(F) bleibt bei unterhalb eines vorgebbaren Schwellwertes (q₀) liegenden Werten des Öffnungsquerschnittes auf null und steigt mit über den Schwellwert (q₀) anwachsendem Öffnungsquerschnitt (q) linear bis zum Wert eins an. In einem Multiplizierer (18) wird der Solldruckzusatzrohwert (dP_{R}) mit dem Multiplikationsfaktor (F) zur Erzeugung eines Saugrohr-Solldruckzusatzwertes (dP) multipliziert, der dann als negativer Wert zum zugeführten Saugrohr-Solldruckgrundwert (P_{G}) addiert wird. Der resultierende Wert wird einer Maximalauswahleinheit (19) zugeführt, der andererseits ein zulässiger Minimalsolldruck (P_{M}) zugeführt ist. Dieser zulässige Minimalsolldruckwert (P_{M}) ist analog zum Saugrohr-Solldruckrohwert (P_{K}) durch ein abgespeichertes Kennfeld (20) bestimmt, welches ihn in Abhängigkeit von der Motordrehzahl (n) und der Motorlast (L) vorgibt. Dieses Kennfeld (20) ist so gewählt, daß der jeweilige Kennfeldwert den im betreffenden Motorbetriebspunkt mindestens einzuhaltenden Saugrohrsolldruck wiedergibt, mit dem verhindert wird, daß der Motor (1) in ungünstigen Arbeitspunkten mit unerwünscht niedrigem Saugrohrdruck betrieben wird. Die Maximalauswahleinheit (19) gewährleistet die Einhaltung dieses Mindestsolldrucks (P_{M}), indem sie den größten der beiden ihr zugeführten Druckwerte als den für die Ansaugluftdrosselung und die Ladedruckregelung maßgeblichen Saugrohrsolldruck (P_{S}) auswählt, der dann einem nachfolgenden Regler als entsprechende Führungsgröße dient.

Mit diesem in Fig. 1 veranschaulichten Regelungsteil der Motorregeleinrichtung für den Dieselmotor (1) wird eine vorteilhafte Berücksichtigung der Abgasrückführregelsituation (10) für die Ansaugluftdrosselung und die Ladedruckregelung realisiert. Solange das Abgasrückführventil (10) nicht zu weit geöffnet ist, d.h. solange sein Öffnungsquerschnitt unter dem Schwellwert (q₀) liegt, wird der kennfeldbasierte Saugrohr-Solldruckgrundwert (P_{G}) unverändert als Saugrohrsolldruck (P_{S}) herangezogen. Wenn das Abgasrückführventil (10) hingegen immer weiter geöffnet wird und die Frischluftmassenstrom-Regeldifferenz (dm_{L}) trotzdem nicht mehr auf null geregelt werden kann, was anzeigt, daß eine ausreichend hohe Abgasrückführrate in zunehmendem Maße nicht mehr allein durch Änderung des Öffnungsquerschnitts des Abgasrückführventils (10) erzielbar ist, wird vom kennfeldbasierten Saugrohr-Solldruckgrundwert (P_{G}) ein entsprechend betraglich ansteigender Solldruckzusatzwert (dP) zur Gewinnung des Saugrohrsolldrucks (P_{S}) abgezogen. Diese von der Stellung des Abgasrückführventils (10) und der Frischluftmassenstrom-Regeldifferenz (dm_{L}) abhängige Erniedrigung des Saugrohrsolldrucks (P_{S}) hat zur Folge, daß die Ansaugluftdrosselung und die Ladedruckregelung auf einen kleineren Saugrohrdruck (P) hinarbeiten, d.h. daß eine höhere Ansaugluftdrosselung und/oder ein geringerer Ladedruck eingestellt werden, so daß sich bei gegebenem Öffnungsquerschnitt des Abgasrückführventils (10) eine Erhöhung der Abgasrückführrate erzielen läßt.

Die beschriebene Einrichtung zur Dieselmotorregelung bewirkt somit eine automatische Anpassung der Ansaugluftdrosselung und der Ladedruckregelung an die Betriebssitutation der Abgasrückführregelung. Dies ermöglicht eine einfache Applikation der Einrichtung in unterschiedlichen Dieselmotoranlagen. Dabei können alle drei Regelungsfunktionalitäten optimal dargestellt werden, und es gibt keine gegenseitig negative Beeinflussung zwischen Ansaugluftdrosselung und Ladedruckregelung. Der Saugrohrdruck wird sowohl im Ansaugluftdrosselungsbetrieb als auch im Ladedruckregelbetrieb geregelt und nicht nur gesteuert und kann folglich ständig überwacht werden. Die für das Abgasemissionsverhalten des Motors maßgebliche Abgasrückführrate ist durch ein einziges Kennfeld festgelegt, das den Sollwert des Frischluftmassenstroms motorbetriebspunktabhängig vorgibt.

## Patentansprüche

1. Einrichtung zur Regelung des Betriebs eines Dieselmotors (1) mit Abgasrückführung und Ansaugluftdrosselung, mit
- einem Regelkreis zur Regelung der Abgasrückführrate über ein Abgasrückführ-Stellglied (10) mit dem Frischluftmassenstrom (m_{L}) als Regelgröße und
- einem Regelkreis zur Saugrohrdruckregelung mittels Ansaugluftdrosselung,
**gekennzeichnet durch**
- eine Einheit (14, 15) zur Bestimmung des Saugrohrsolldrucks (P_{S}) für die Ansaugluftdrosselung und gegebenenfalls eine Ladedruckregelung derart, daß sich der Saugrohrsolldruck additiv aus einem motorbetriebspunktabhängig bestimmten Solldruckgrundwert (P_{G}) und einem Solldruckzusatzwert (dP) zusammensetzt, der durch Multiplikation eines abhängig von der Motordrehzahl (n) und der Frischluftmassenstrom-Regeldifferenz (dm_{L}) der Abgasrückführratenregelung vorgegebenen Solldruckzusatzrohwertes (dP_{R}) mit einem vom Öffnungsquerschnitt (q) des Abgasrückführ-Stellgliedes (10) abhängigen Faktor (F) festgelegt wird.

2. Einrichtung nach Anspruch 1, weiter
**dadurch gekennzeichnet, daß**
der vom Öffnungsquerschnitt (q) des Abgasrückführ-Stellgliedes (10) abhängige Multiplikationsfaktor (F) im Bereich des Öffnungsquerschnittes (q) zwischen null und einem vorgebbaren Schwellwert (q₀) auf null gesetzt ist und im Bereich zwischen dem Schwellwert und dem maximalen Öffnungsquerschnitt stetig bis auf den Wert eins ansteigt.

3. Einrichtung nach Anspruch 1 oder 2, weiter
**gekennzeichnet durch**
- eine Saugrohrminimaldruck-Kennfeldstufe (20) zur Vorgabe eines motorbetriebspunktabhängigen, minimal zulässigen Saugrohr-Minimalsolldrucks (P_{M}) und
- eine Maximalauswahleinheit (19), der dieser Minimalsolldruck (P_{M}) sowie der sich durch Addition des Saugrohr-Solldruckgrundwertes (P_{G}) mit dem Solldruckzusatzwert (dP) ergebende Druckwert zugeführt sind und die daraus den größeren der beiden Werte als den Saugrohrsolldruck (P_{S}) für die Ansaugluftdrosselung und gegebenenfalls die Ladedruckregelung auswählt.

## Claims

1. Device for regulating the operation of a diesel engine with exhaust-gas feedback and intake air throttling, with
- an adjustment circuit for regulating the rate of feedback of exhaust-gas by means of an exhaust-gas feedback adjustment member (10) with the mass flow (m_{L}) of fresh air being the regulated quantity and
- a regulation circuit for suction-pipe pressure-regulation by means of intake air throttling,
characterized by
a unit (14, 15) for determining the required pressure in the suction pipe (Pₛ) of the intake-air throttling and, where applicable, a boost regulator such that the required pressure of the suction pipe is accumulatively made up of a basic required pressure value (P_{G}), which is determined on the basis of a point in the running of the engine, and a additional required pressure value (dP), which is determined by the multiplication of a rough, additional required-pressure value (dP_{R}) provided to the exhaust-gas feedback rate-adjustment on the basis of the engine revolutions (n) and the fresh-air mass flow adjustment-difference (dm_{L}), and a factor (F) depending on the cross-sectional area (q) of the opening of the exhaust-gas feedback adjuster (10).

2. Device in accordance with claim 1, further
characterized in that
the multiplication factor (F), which is dependent on the cross-sectional area (q) of the opening of the exhaust feedback adjuster (10), is set to zero in the range of the opening cross-sectional area (q) between zero and a set threshold value (qₒ), and rises constantly, between the threshold value and the maximum opening cross-sectional area, to the value of one.

3. Device in accordance with claim 1 or 2, further
characterized by
- a suction-pipe minimum pressure performance-graph stage (20) for passing on a minimally permissible suction-pipe minimum required pressure (P_{M}) which depends on a point in the running of the engine, and
- a maximal feed control unit (19) which is supplied with this minimal required pressure (P_{M}) and the pressure value resulting from the addition of the suction-pipe basic, required pressure-value (P_{G}) to the supplementary required pressure value (dP), and the larger of the two values is selected as the required suction-pipe pressure (Pₛ) for the suction-pipe throttling and, where applicable, for the boost regulator.

## Revendications

1. Dispositif de régulation du fonctionnement d'un moteur diesel (1) avec recyclage des gaz d'échappement et étranglement sur l'air d'aspiration, avec
- un circuit de régulation pour la régulation du taux de recyclage des gaz d'échappement, par l'intermédiaire d'un organe de réglage de recirculation de gaz d'échappement (10), le débit-masse d'air neuf (m_{L}) étant utilisé comme grandeur de réglage, et
- un circuit de régulation pour la régulation de pression dans le collecteur d'aspiration, au moyen d'un étranglement sur l'air d'aspiration,
caractérisé par
- une unité (14, 15) pour déterminer la pression de consigne au collecteur d'aspiration (P_{S}) pour l'étranglement sur l'air d'aspiration et, le cas échéant, une régulation de pression de suralimentation, de manière que la pression de consigne au collecteur d'aspiration soit constituée de l'addition d'une valeur de base de pression de consigne (P_{C}), déterminée à partir d'un point de fonctionnement du moteur, et d'une valeur additionnelle de pression de consigne (dP), fixée par multiplication d'une valeur brute additive de pression de consigne (dP_{R}), prédéterminée en fonction de la vitesse de rotation de moteur (n), et de la différence de régulation de débit-masse d'air neuf (dm_{L}) de la régulation de recirculation des gaz d'échappement, avec un facteur (F) dépendant de la section transversale d'ouverture (q) de l'organe de réglage de recirculation des gaz d'échappement (10).

2. Dispositif selon la revendication 1, caractérisé en outre en ce que le facteur de multiplication (F), dépendant de la section transversale d'ouverture (q) de l'organe de réglage de recirculation des gaz d'échappement (10), dans la plage de la section d'ouverture (q), entre zéro et une valeur de seuil (q₀) susceptible d'être prédéterminée, est fixé à zéro et, dans la plage située entre la valeur de seuil et la section transversale d'ouverture maximale, va en augmentant continûment jusqu'à la valeur un.

3. Dispositif selon la revendication 1 ou 2,
caractérisé en outre par
- un étage à caractéristique de pression minimale au collecteur d'aspiration (20), pour attribuer une pression de consigne minimale au collecteur d'aspiration (P_{M}), minimale admissible, dépendant du point de fonctionnement du moteur,
- une unité de sélection maximale (19) à laquelle sont amenées cette pression de consigne minimale (P_{M}), ainsi que la valeur de pression résultant de l'addition de la valeur de base de pression de consigne au collecteur d'aspiration (P_{G}) et de la valeur additionnelle de pression de consigne (dP) et qui, à partir de cela, sélectionne la plus grande des deux valeurs à titre de pression de consigne au collecteur d'aspiration (P_{S}) pour l'étranglement sur l'air d'aspiration et, le cas échéant, la régulation de la pression de suralimentation.
